# EUROPÄISCHE PATENTSCHRIFT

(11) **EP 3 728 082 B1**
(45) Veröffentlichungstag und Bekanntmachung des Hinweises auf die Patenterteilung: **10.05.2023**
(21) Anmeldenummer: 18786208.1
(22) Anmeldetag: 04.10.2018
(51) Int. Cl.: B65G 19/22

(54) **MITNEHMER FÜR KETTENKRATZERFÖRDERER**
DRIVER FOR SCRAPER CHAIN CONVEYORS
ENTRAÎNEUR DESTINÉ À UN CONVOYEUR À CHAÎNE À RACLETTES

(30) Priorität: 20.12.2017 DE 202017107766 U
(43) Veröffentlichungstag der Anmeldung: 28.10.2020
(73) Patentinhaber: Thiele GmbH & Co. KG, 58640 Iserlohn (DE)
(72) Erfinder: SCHERF, Burkhard, 59192 Bergkamen (DE)
(74) Vertreter: Ksoll, Peter
(86) Internationale Anmeldenummer: PCT/DE2018/100825
(87) Internationale Veröffentlichungsnummer: WO 2019/120361

(56) Entgegenhaltungen:
- EP-A1- 0 083 119
- CN-U- 205 076 383
- DE-A1- 3 317 682
- DE-A1-102004 038 688
- DE-A1-102009 055 004
- US-A- 2 792 928

## Beschreibung

Die Erfindung betrifft einen Mitnehmer für Kettenkratzerförderer gemäß den Merkmalen im Oberbegriff von Anspruch 1.

Ein Kettenkratzerförderer ist ein Fördermittel, bei dem das Fördergut in einem aus Förderrinnen gebildeten Rinnenstrang durch Mitnehmer eines Kettenbandes bewegt wird. Die Mitnehmer, auch Kratzer genannt, sind an den Fördererketten befestigt. Die Mitnehmer stellen den Eingriff in das Fördergut her und bewegen dieses mit Fördergeschwindigkeiten in Förderrichtung. Nach der Anzahl und Lage der Kettenstränge werden Einkettenförderer, Doppelmittenkettenförderer, Doppelaußenkettenförderer und Dreikettenförderer unterschieden.

Funktions- und betriebsbedingt unterliegen die Mitnehmer eines Kettenkratzerförderers hohem Verschleiß.

Durch die DE 10 2004 038 688 A1 ist ein Mitnehmer nach dem Oberbegriff des Anspruchs 1 bekannt. Insbesondere, ist ein Mitnehmer für Strebförderer bekannt, bei dem die in die Führungen der Förderrinnen bzw. des Rinnenstrangs angreifenden Enden einen Belag aus einem verschleißfesten Material aufweisen. Hierdurch soll der Verschleiß an der Unterseite der Mitnehmerenden verringert werden, wenn der Mitnehmer im unteren Trum bewegt wird und mit seinen Enden auf der seitlichen Führung aufliegt.

Die DE 33 17 682 A1 offenbart ein Verfahren und eine Vorrichtung zur Teilerneuerung von Mitnehmern in Kettenbändern von Kratzerförderern. Zur Reparatur von verschlissenen Mitnehmern ist vorgesehen, dass an den verschlissenen Enden Material abgetragen wird und dabei eine mit einer Stufe abgesetzte Keilfläche erzeugt wird. Hierauf werden Ersatzstücke aufgeschoben und mit den Mitnehmerenden verschweißt.

Zum Stand der Technik zählt ferner durch die CN 205 076 383 U ein Mitnehmer für Kettenkratzerförderer, dessen Kratzerflügel von einem Verschleißschutzkörper umgriffen sind.

Der Erfindung liegt, ausgehend vom Stand der Technik, die Aufgabe zugrunde, einen bauteiltechnisch und für den betrieblichen Einsatz, insbesondere hinsichtlich der Verschleißfestigkeit und der Lebensdauer, verbesserten Mitnehmer für Kettenkratzerförderer zu schaffen.

Die Lösung dieser Aufgabe besteht nach der Erfindung in einem Mitnehmer für Kettenkratzerförderer gemäß den Merkmalen von Anspruch 1.

Vorteilhafte Ausgestaltungen und Weiterbildungen des erfindungsgemäßen Mitnehmers sind Gegenstand der abhängigen Ansprüche 2 bis 11.

Ein Mitnehmer für Kettenkratzerförderer weist einen Mittelabschnitt auf mit einer Kettengliedaufnahme zum Anschließen des Mitnehmers an Kettenglieder einer Fördererkette. Beidseitig an dem Mittelabschnitt des Mitnehmers schließen sich Kratzerflügel an. Jeder Kratzerflügel weist vom Mittelabschnitt ausgehend einen Stegabschnitt und einen gegenüber dem Stegabschnitt verbreiterten Endabschnitt auf.

An der Unterseite des Stegabschnitts ist ein Verschleißblech vorgesehen, welches ausgehend von einer Stufe an der Unterseite des Mittelabschnitts den Stegabschnitt in Richtung zum Endabschnitt abdeckt.

Diese Maßnahme trägt zu einer erheblichen Steigerung der Lebensdauer eines Mitnehmers bei, und zwar sowohl was die Abriebs- und Verschleißfestigkeit anbelangt als auch das Verhalten beim Gleiten der Mitnehmer in der Förderrinne. Hierdurch ergeben sich auch positive Effekte auf die Fördererleistung.

Eine Ausgestaltung des Verschleißblechs sieht vor, dass dieses einen insbesondere rechteckig konfigurierten Basisabschnitt aufweist mit einem gegen den Basisabschnitt in Richtung zu den Endabschnitten der Kratzerflügel verbreiteten Enden. Hierdurch wird die Unterseite des Mitnehmers an beiden Kratzerflügeln wirksam gegen Verschleiß geschützt und das Gleitverhalten in den Förderrinnen weiter verbessert.

Ein weiterer vorteilhafter Aspekt sieht vor, dass das Verschleißblech sich bis zum Endabschnitt des Kratzerflügels erstreckt und den Endabschnitt zumindest bereichsweise abdeckt. Auch diese Maßnahme erhöht wirksam die Verschleißfestigkeit des Mitnehmers.

Eine weitere vorteilhafte Ausführungsform eines erfindungsgemäßen Mitnehmers sieht vor, dass jeder Kratzerflügel eine Kratzerspitze aufweist, wobei die Kratzerspitze zumindest bereichsweise vom Verschleißblech abgedeckt ist.

Weiterhin kann an der Oberseite des Endabschnitts eines Kratzerflügels ebenfalls ein Verschleißkörper vorgesehen sein.

Der Verschleißkörper kann als ein vom Verschleißblech separates Bauteil ausgeführt sein. Hierbei wird der Verschleißkörper auf der Oberseite des Endabschnitts mit diesem stoffschlüssig gefügt.

Möglich ist es weiterhin, dass das Verschleißblech und der Verschleißkörper materialeinheitlich einstückig ausgeführt sind. Der Verschleißkörper ist dann Bestandteil des Verschleißblechs. Dieses deckt die Unterseite des Kratzerflügels ab und erstreckt sich um die Kratzerspitze herum bis auf die Oberseite des Endabschnitts.

Die Verschleißkörper an der Oberseite des Endabschnitts schützen den Bereich, der oberseitig mit den Führungen der Förderrinnen in Kontakt gelangt. Zudem liegen die Mitnehmer im Untertrum auf den Verschleißkörpern auf.

Die Mitnehmer bzw. die Grundkörper der Mitnehmer bestehen aus Kettenstahl oder aus einem Vergütungsstahl, z. B. 42CrMo4.

Im Rahmen der Erfindung werden Verschleißbleche ebenso wie Verschleißkörper als besonders vorteilhaft und tauglich angesehen, welche aus einem verschleiß- und abriebfesten Stahl bestehen mit einer Brinellhärte von größer oder gleich (≥) 400 HB, insbesondere liegt die Brinellhärte in einem Bereich zwischen 400 HB bis 600 HB.

Erfindungsgemäß ist vorgesehen, dass in jedem Kratzerflügel ein sich in dessen Längsrichtung erstreckender Hohlraum vorgesehen ist. Der Hohlraum ist unterseitig vom Verschleißblech abgedeckt.

Diese Ausgestaltung führt zu einer Gewichtsreduzierung der Mitnehmer und damit der gesamten Förderereinrichtung. Bei der großen Anzahl der Mitnehmer ist eine spürbare Gewichtsreduzierung möglich, so dass ggfs. auch die installierte Antriebsleistung gesenkt werden kann.

Möglich ist, dass der Hohlraum mit einem Füllmaterial gefüllt ist, welches leichter als der Werkstoff des Mitnehmers ist, beispielsweise einem porösen oder geschäumten Werkstoff ebenso wie einem Faserwerkstoff.

Die Verschleißbleche sind vorzugsweise mit den Mitnehmern stoffschlüssig gefügt, insbesondere verschweißt. Hierbei kann ein Verschleißblech umlaufend oder auch nur bereichsweise an der Unterseite eines Mitnehmers gefügt sein.

Eine vorteilhafte Ausgestaltung sieht vor, dass das Verschleißblech am mittelabschnittsseitigen Ende und/oder an der endabschnittigen Seite vorstehende Vorsprünge aufweist. Die Vorsprünge fungieren als Formschlusselemente und tragen zusätzlich zur stabilen Befestigung des Verschleißblechs an der Unterseite der Kratzerflügel bei. Auch hierdurch wird die Leistungsfähigkeit der Mitnehmer gesteigert.

Eine für die Praxis vorteilhafte Ausführungsform des Mitnehmers sieht vor, dass das Verschleißblech eine Länge L1 und ein Kratzerflügel eine Länge L2 besitzt, hierbei wird das Verhältnis L1 zu L2 der Länge L1 des Verschleißblechs zur Länge L2 des Kratzerflügels zwischen 20 % bis 100 % oder zwischen 50 % bis 100 % oder zwischen 65 % bis 90 % bemessen.

Weiterhin vorteilhaft ist, wenn das Verschleißblech eine Höhe H1 und ein Kratzerflügel an seiner höchsten Stelle ein Höhe H2 besitzt, wobei das Verhältnis H1 zu H2 der Höhe H1 des Verschleißblechs zur Höhe H2 des Kratzerflügels zwischen 6 % bis 35 % oder zwischen 8 % bis 35 % oder zwischen 10 % bis 20 % bemessen ist.

Das Verschleißblech besitzt eine Breite B1 und ein Kratzerflügel eine Breite B2. Das Verhältnis B1 zu B2 der Breite B1 des Verschleißblechs zur Breite B2 des Kratzerflügels liegt vorzugsweise zwischen 50 % bis 200 % oder zwischen 60 % bis 120 %.

Die vorstehenden geometrischen Gestaltungsregeln für die Länge des Verschleißblechs und der Kratzerflügel ebenso wie zu deren Höhe ermöglicht eine bauteiltechnisch vorteilhafte Auslegung der Mitnehmer. Hierzu trägt eine vorteilhafte Korrelation der Abmessungen der Breite eines Verschleißblechs zur Breite eines Kratzerflügels bei.

Die Erfindung ist nachfolgend anhand von Ausführungsbeispielen näher beschrieben. Es zeigen:
- Figuren 1 bis 7: einen an einer Fördererkette festgelegten erfindungsgemäßen Mitnehmer in einer Ansicht von unten, einer Stirnansicht, einen Längsschnitt, eine Ansicht von oben, einer perspektivischen Ansicht, einer Seitenansicht sowie in einer Explosionsdarstellung;
- Figuren 8 bis 14: entsprechende Ansichten auf eine zweite Ausführungsform eines erfindungsgemäßen Mitnehmers;
- Figuren 15 bis 21: entsprechende Ansichten auf eine dritte Ausführungsform eines erfindungsgemäßen Mitnehmers;
- Figuren 22 bis 28: entsprechende Ansichten auf eine vierte Ausführungsform eines erfindungsgemäßen Mitnehmers;
- Figuren 29 bis 35: entsprechende Ansichten auf eine fünfte Ausführungsform eines erfindungsgemäßen Mitnehmers;
- Figuren 36 bis 42: entsprechende Ansichten auf eine sechste Ausführungsform eines erfindungsgemäßen Mitnehmers;
- Figuren 43 bis 49: entsprechende Ansichten auf eine siebte Ausführungsform eines erfindungsgemäßen Mitnehmers und
- Figuren 50 bis 56: entsprechende Ansichten auf eine achte Ausführungsform eines erfindungsgemäßen Mitnehmers.

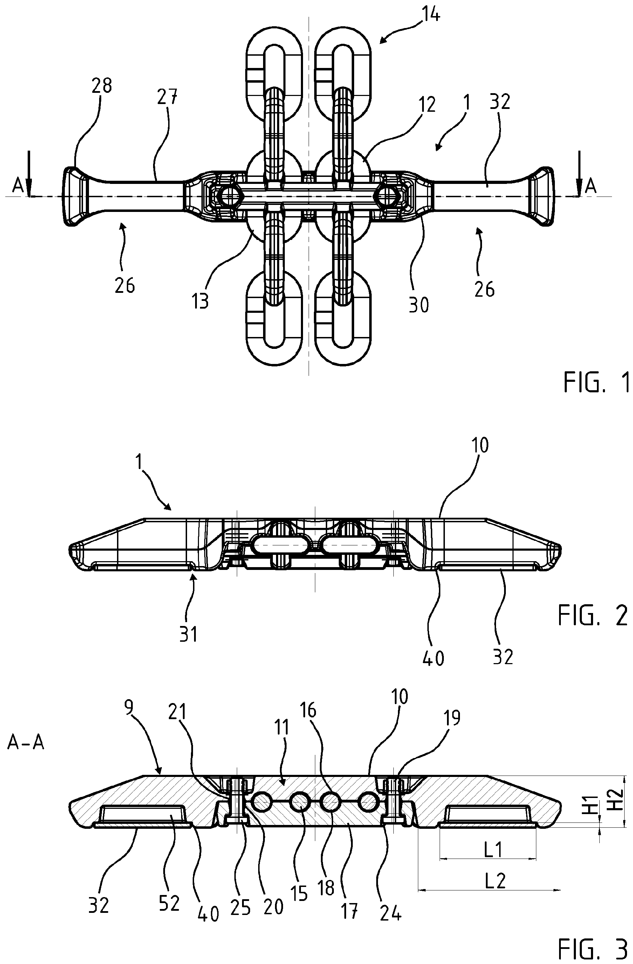

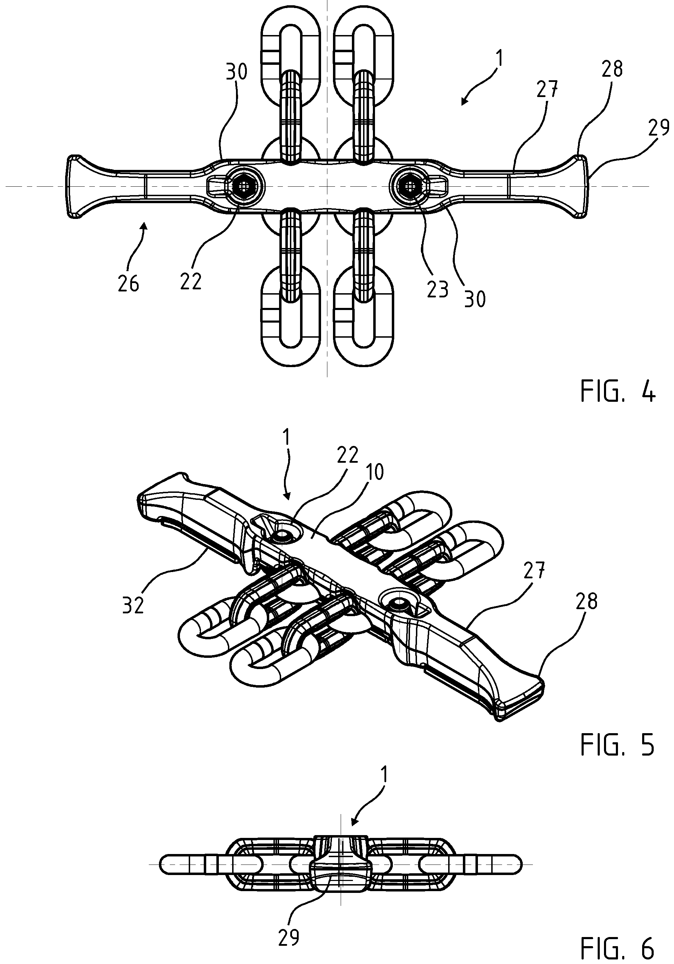

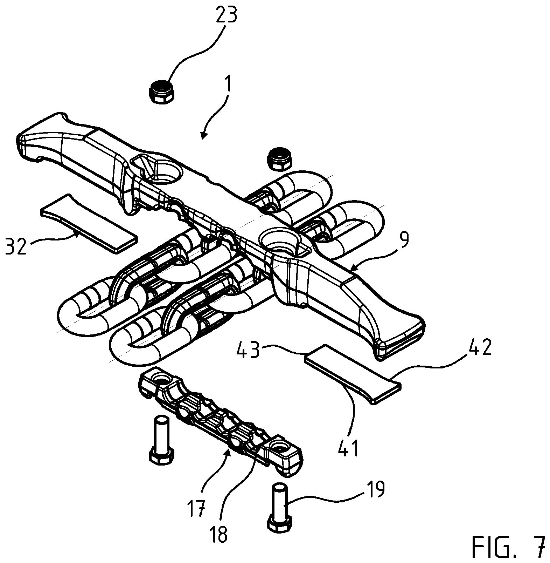

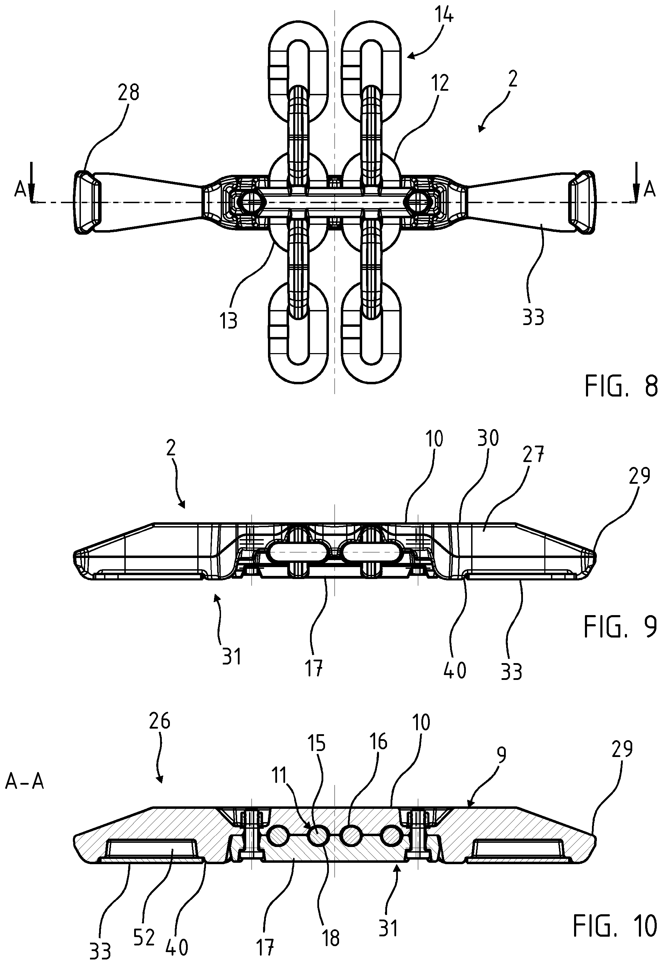

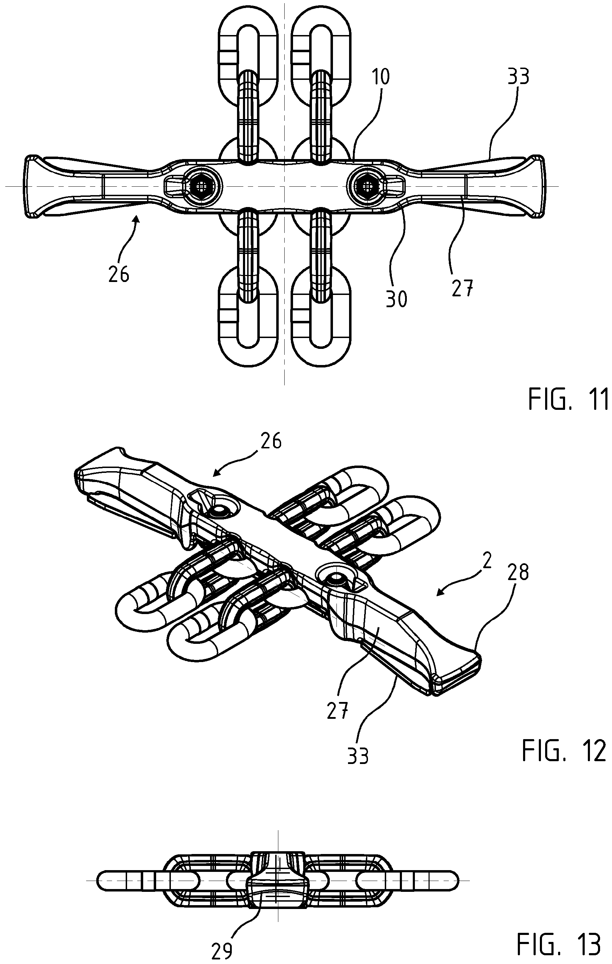

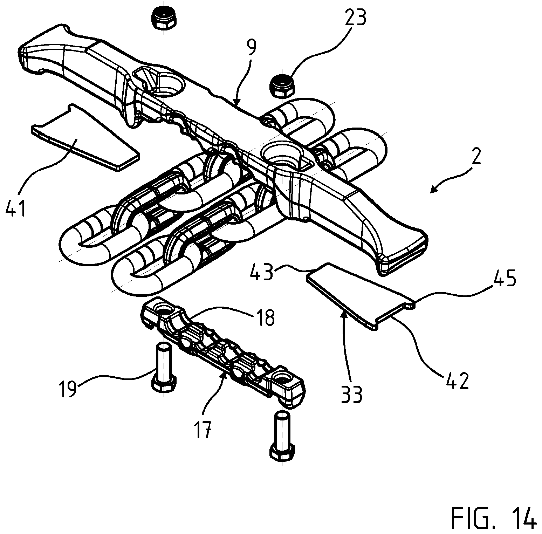

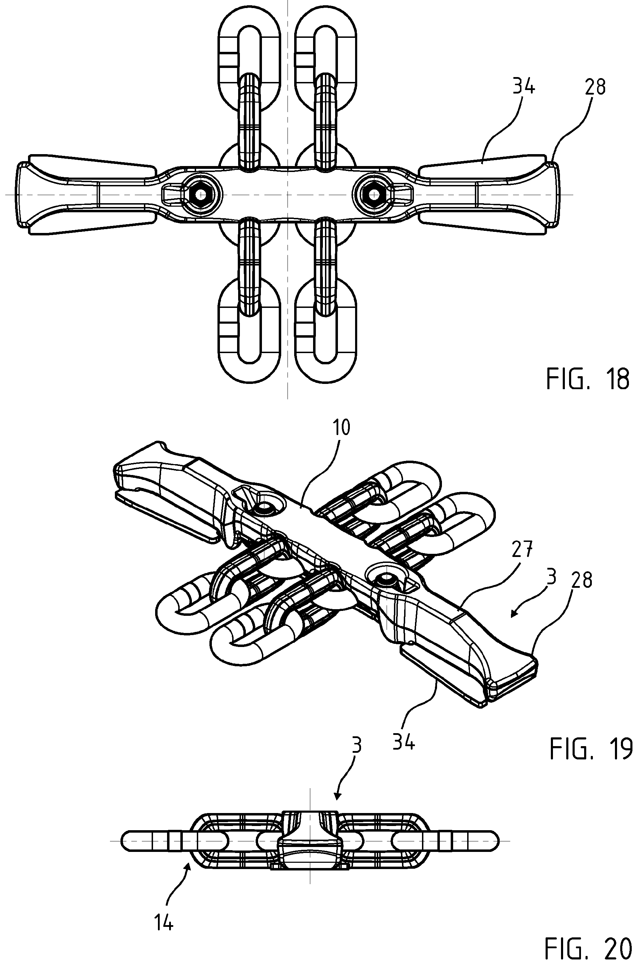

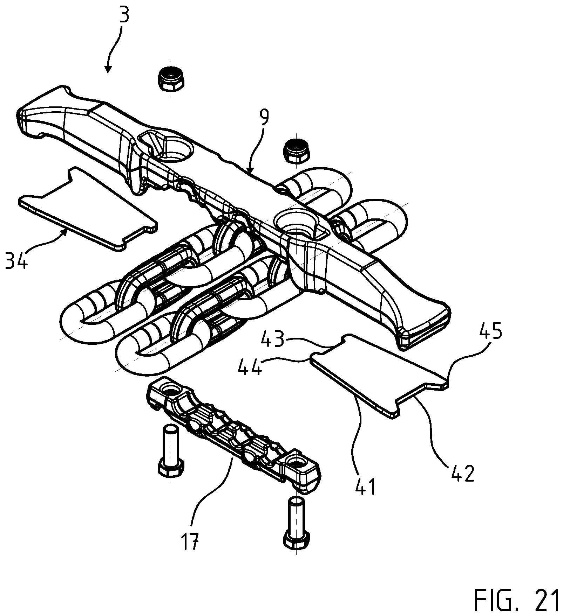

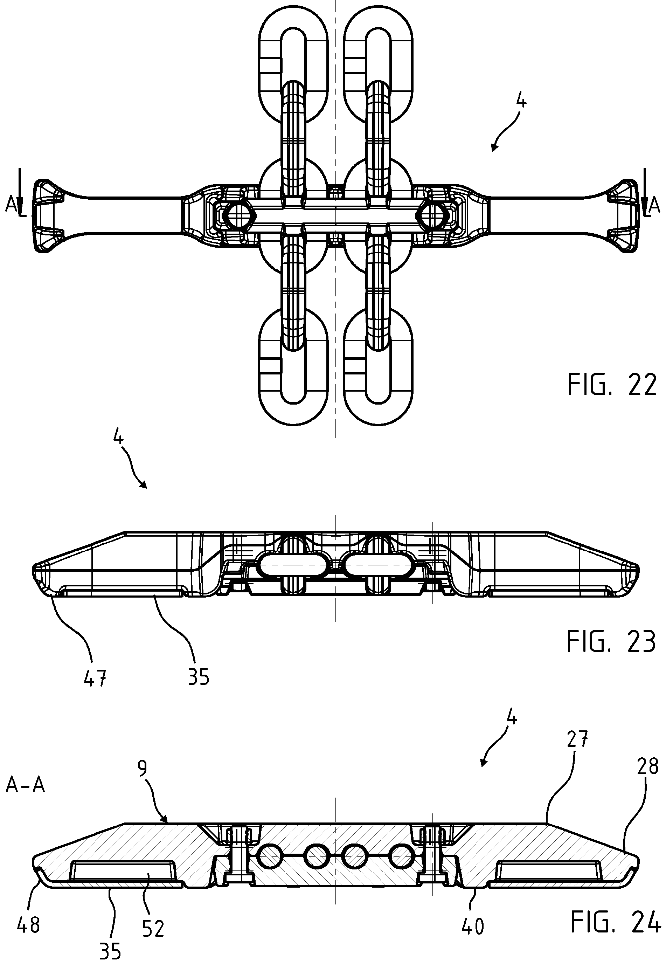

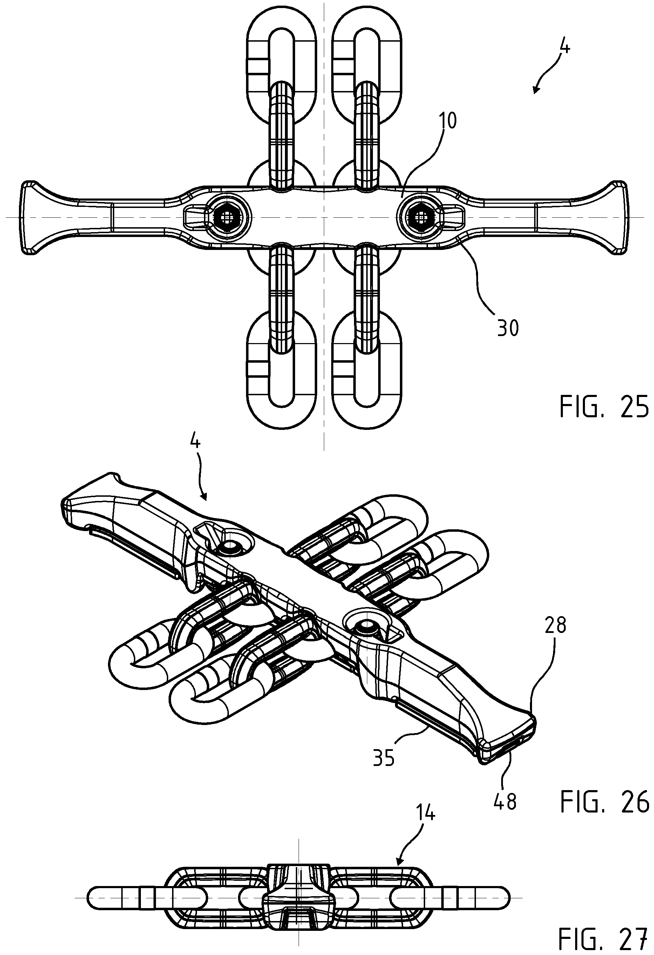

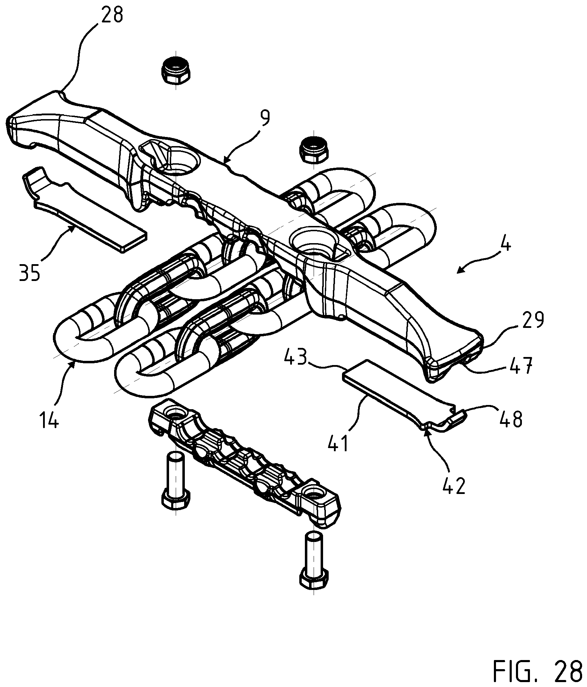

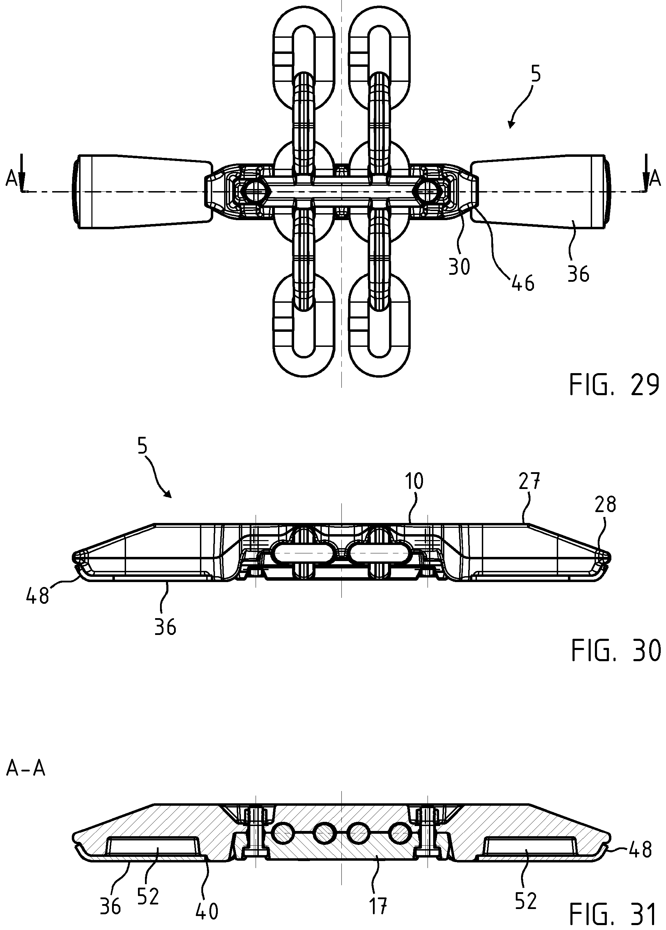

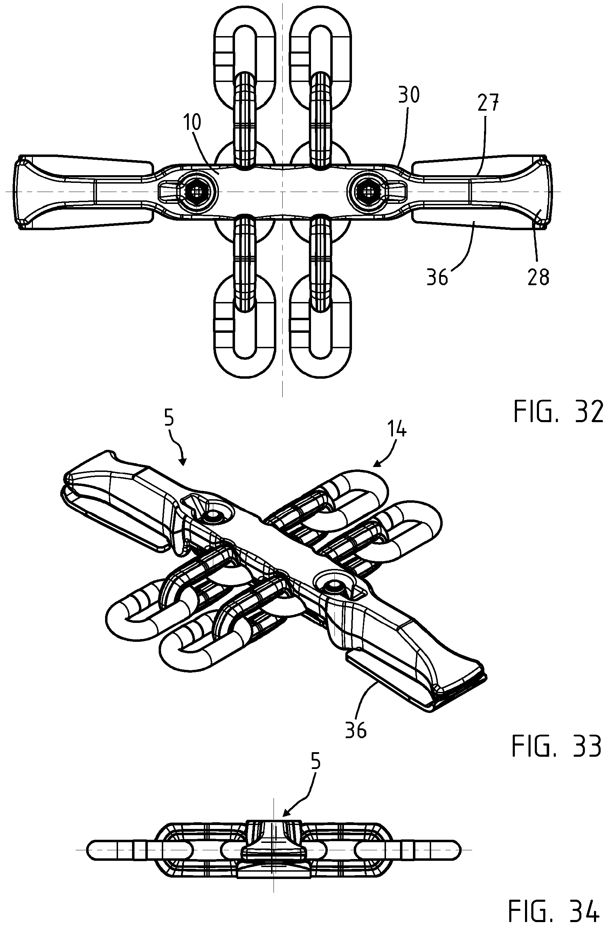

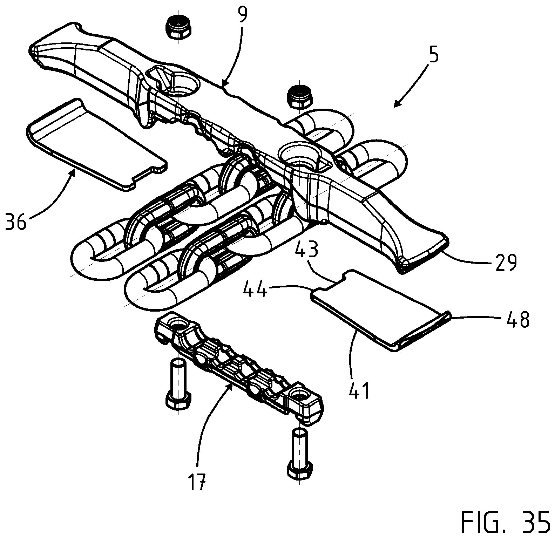

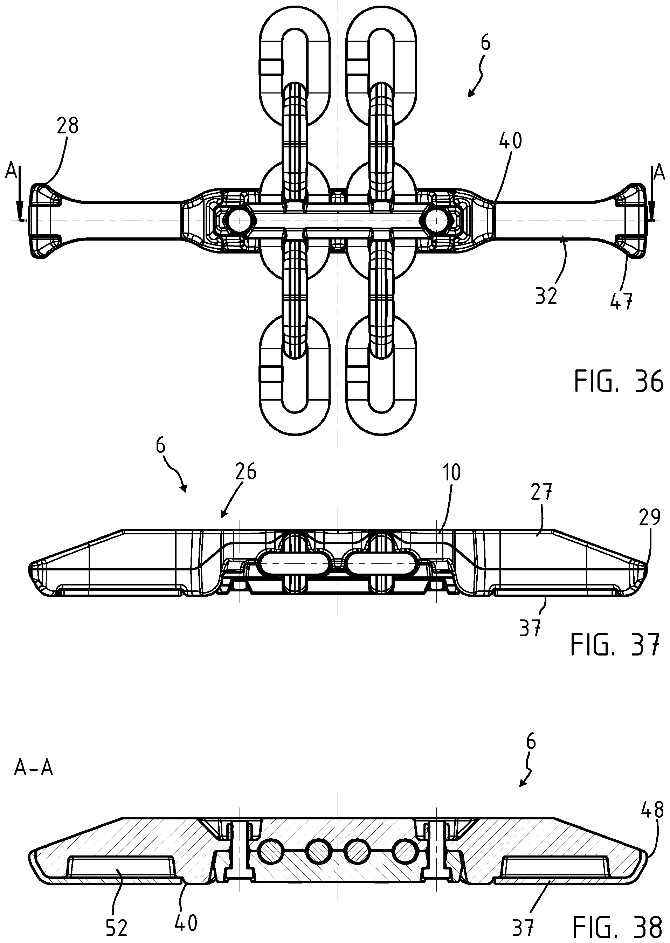

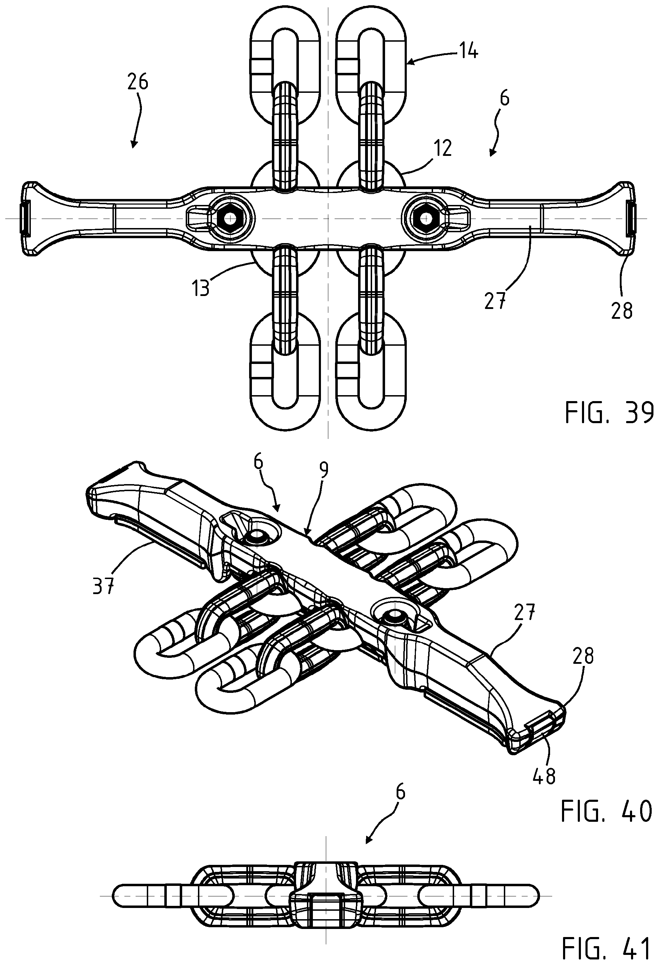

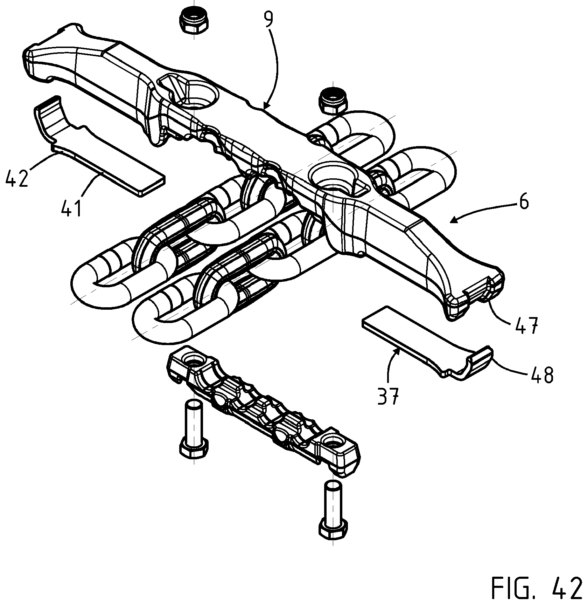

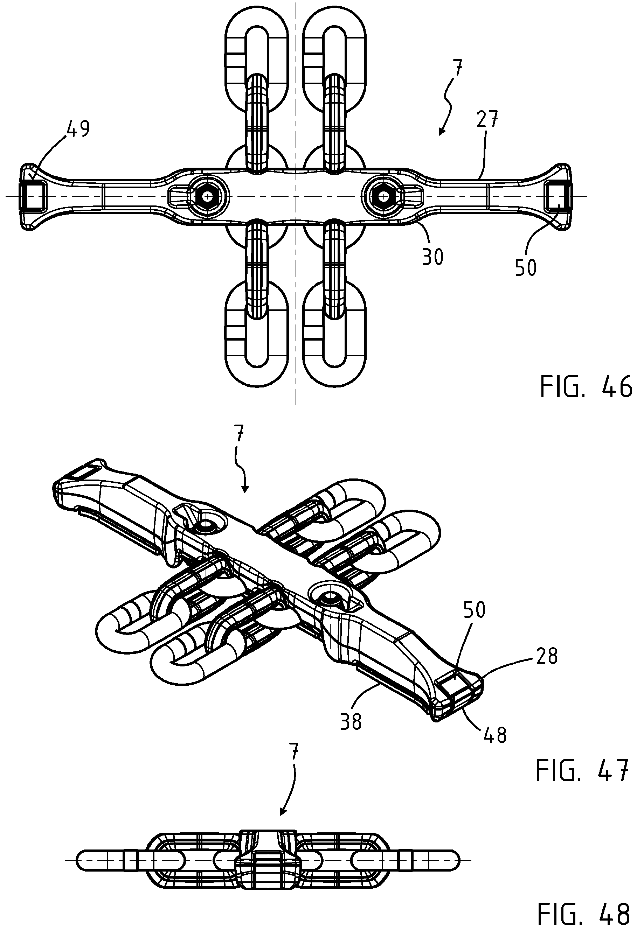

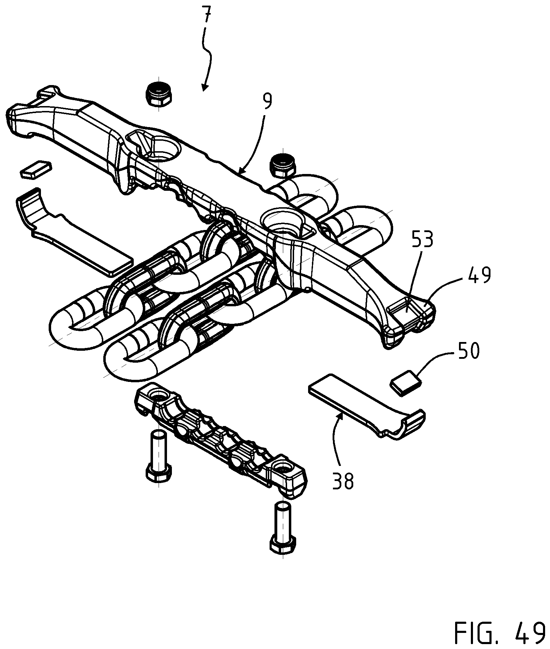

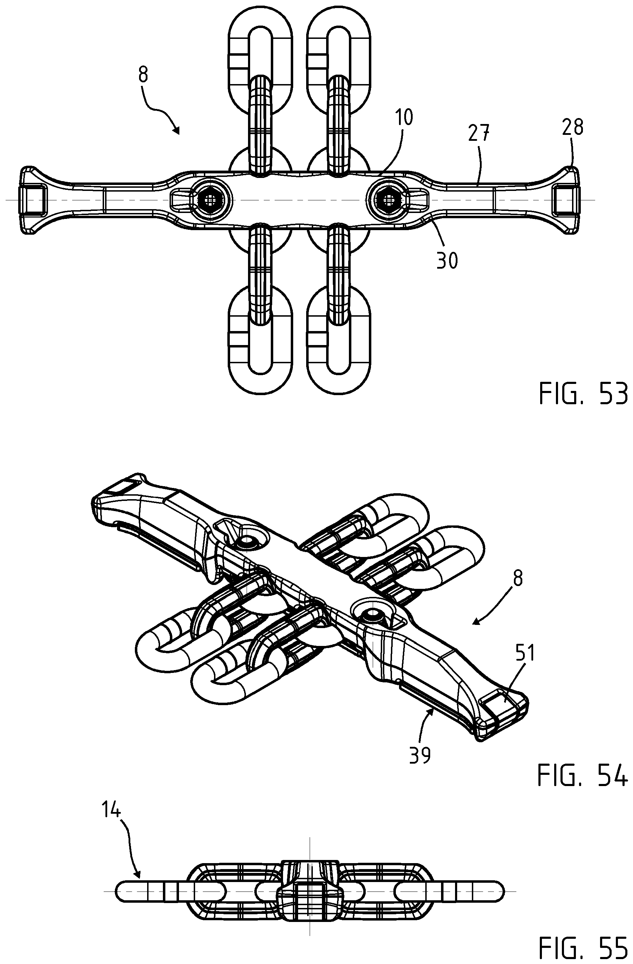

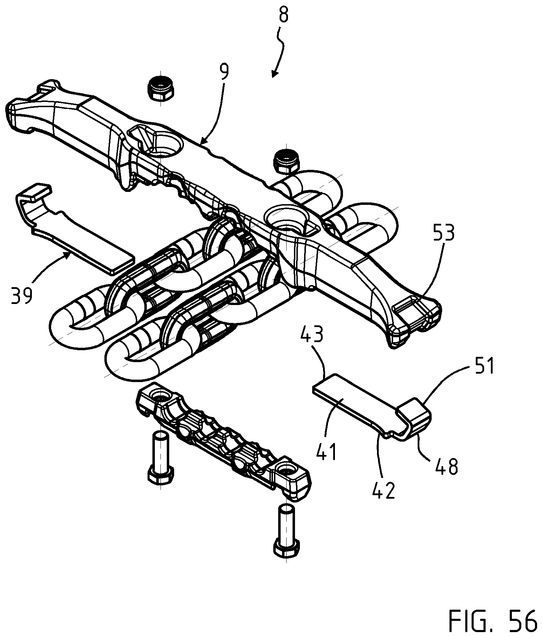

Anhand der Figuren 1 bis 7, 8 bis 14, 15 bis 21, 22 bis 28, 29 bis 35, 36 bis 42, 43 bis 49 sowie 50 bis 56 ist jeweils eine Ausführungsform eines erfindungsgemäßen Mitnehmers 1, 2, 3, 4, 5, 6, 7, 8 erläutert. Die Mitnehmer 1 - 8 entsprechen einander vom grundsätzlichen Aufbau. Dementsprechend sind gleiche Bauteile bzw. Bauteilkomponenten mit den gleichen Bezugszeichen versehen.

Die Mitnehmer 1 - 8 sind spiegelsymmetrisch zu ihrer Mittellängsachse und ihrer Mittelquerachse gestaltet. Jeder Mitnehmer 1 - 8 weist einen metallischen Grundkörper 9 auf. Dieser besteht aus einem Kettenstahl oder einem Vergütungsstahl, beispielsweise 42CrMo4. Der Mitnehmer 1 - 8 bzw. dessen Grundkörper 9 weist einen Mittelabschnitt 10 mit einer Kettengliedaufnahme 11 zum Anschließen des Mitnehmers 1 - 8 an Kettenglieder 12, 13 einer Fördererkette 14.

Die Kettenaufnahme 11 umfasst an Schenkel 15 der Kettenglieder 12, 13 angepasste halbkreisförmige Ausnehmungen 16. In diesen liegen die Schenkel 15 der Kettenglieder 12, 13 an. Unterseitig ist ein lösbares Verschlussteil 17 vorgesehen. Das Verschlussteil 17 weist komplementär zu den Schenkeln 15 der Kettenglieder 12, 13 ausgebildete Ausnehmungen 18 auf und umgreift diese von unten. Mittels Schraubbolzen 19 ist das Verschlussteil 17 mit dem Grundkörper 9 des Mitnehmers 1 - 8 verbunden. Die Schraubbolzen 19 durchsetzen korrespondierende Bohrungen 20, 21 im Verschlussteil 17 und im Mittelabschnitt 10 des Mitnehmers 1 - 8. Oberseitig im Mittelabschnitt 10 sind Aufnahmen 22 für Gewindemutter 23 vorgesehen. Unterseitig des Verschlussteils 17 sind Vertiefungen 24 vorgesehen, in welche jeweils ein Schraubbolzen 19 mit seinem Bolzenkopf 25 eingreift.

Beidseitig schließt sich an dem Mittelabschnitt 10 jeweils nach außen gerichtet ein Kratzerflügel 26 an. Jeder Kratzerflügel 26 besitzt einen Stegabschnitt 27 und einen gegenüber dem Stegabschnitt 27 verbreiterten Endabschnitt 28 mit einer äußeren Kratzerspitze 29. Der Mittelabschnitt 10 ist breiter als der Stegabschnitt 27 und geht über einen sich verjüngenden Übergangsabschnitt 30 in den Stegabschnitt 27 über. Der Übergangsabschnitt 30 gehört zum Mittelabschnitt 10 des Mitnehmers 1 bis 8.

An der Unterseite 31 des Stegabschnitts 27 jedes Kratzerflügels 26 ist jeweils ein Verschleißblech 32 - 39 vorgesehen. Das Verschleißblech 32 - 39 erstreckt sich ausgehend von einer Stufe 40 an der Unterseite 31 des Mittelabschnitts 10 und deckt den Stegabschnitt 27 in Richtung zum Endabschnitt 28 ab.

Das Verschleißblech 32 - 39 besteht aus einem verschleiß- und abriebfesten Stahl mit einer Brinellhärte von größer oder gleich (≥) 400 HB bis 600 HB.

Ein Verschleißblech 32 - 39 weist eine Länge L1 und ein Kratzerflügel 26 eine Länge L2 auf. Weiterhin weist ein Verschleißblech 32 - 39 eine Höhe H1 und ein Kratzerflügel 26 an seiner höchsten Stelle eine Höhe H2 auf. Die Länge L1 und die Höhe H1 des Verschleißblechs 32 - 39 sowie die Länge L2 und die Höhe H2 des Kratzerflügels 26 sind exemplarisch in Figur 3 gekennzeichnet.

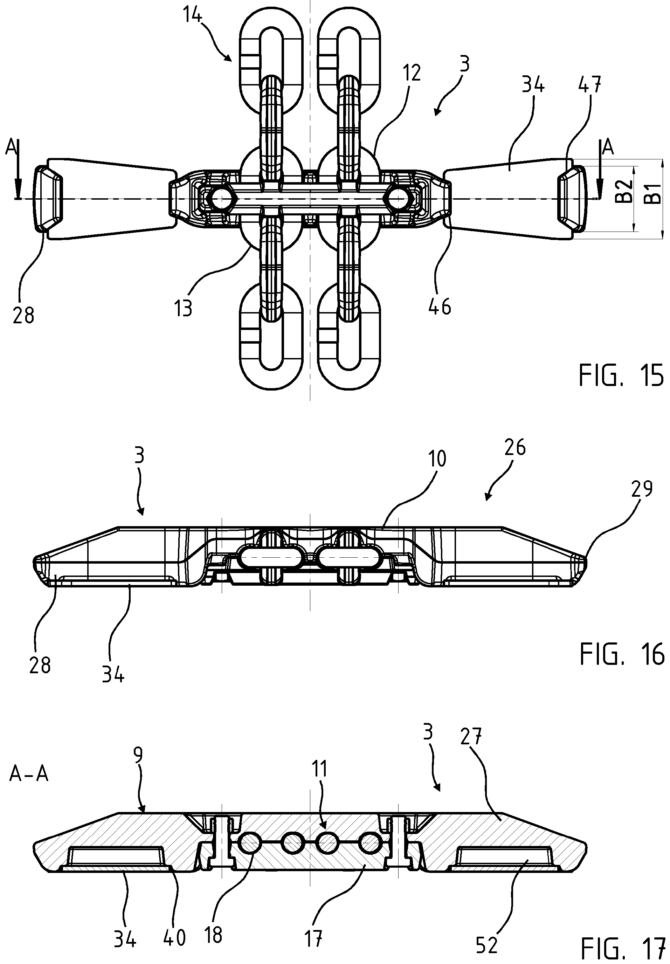

Weiterhin besitzt ein Verschleißblech 32 - 39 eine Breite B1 und ein Kratzerflügel 26 eine Breite B2. Die Breite B1 des Verschleißblechs 32 - 39 und die Breite B2 des Kratzerflügels 26 sind exemplarisch in der Figur 15 gekennzeichnet.

Ein besonderer Vorteil für die Auslegung der Mitnehmer 1 - 8 ist, wenn das Verhältnis L1 zu L2 der Länge L1 des Verschleißblechs 32 - 39 zur Länge L2 des Kratzerflügels 26 zwischen 20 % bis 100 % oder zwischen 50 % bis 100 % oder zwischen 65 % bis 90 % bemessen ist. Weiterhin vorteilhaft ist, wenn das Verhältnis H1 zu H2 der Höhe H1 des Verschleißblechs 32 - 39 zur Höhe H2 des Kratzerflügels zwischen 6 % bis 35 % oder zwischen 8 % bis 35 % oder zwischen 10% bis 20 % bemessen ist. Das Verhältnis B1 zu B2 der Breite B1 des Verschleißblechs 32 - 39 zur Breite B2 des Kratzerflügels 26 liegt in der Praxis bevorzugt zwischen 50 % bis 200 % oder zwischen 60 % bis 120 %.

Die Mitnehmer 1 - 8 unterscheiden sich im Wesentlichen in der Ausgestaltung und Konfiguration der Verschleißbleche 32 - 39.

Das Verschleißblech 32 - 39 weist einen Basisabschnitt 41 und ein gegenüber dem Basisabschnitt 41 verbreitertes Ende 42 auf.

Bei dem Verschleißblech 32, 35, 37, 38 und 39 ist der Basisabschnitt 41 rechteckig konfiguriert. Das sich verbreiternde Ende 42 ist trapezförmig gestaltet.

Bei dem Verschleißblech 33, 34, 36 vergrößert sich der Basisabschnitt 41 bis zum endabschnittsseitigen Ende 42 hin gleichförmig.

Bei den Mitnehmern 2, 3 und 5 ist das Verschleißblech 33, 34, 36 breiter als der Stegabschnitt 27 eines Kratzerflügels 26. Das Verschleißblech 33, 34, 36 ist auch breiter als der Endabschnitt 28 des Mitnehmers 2, 3, 5 und steht entsprechend seitlich gegenüber dem Stegabschnitt 27 und dem Endabschnitt 28 vor.

Die Verschleißbleche 36 des Mitnehmers 1 - 8 weisen am inneren mittelabschnittsseitigen Ende 43 vorstehende Vorsprünge 44 auf.

Die Verschleißbleche 32 des Mitnehmers 7 weisen am äußeren endabschnittsseitigen Ende 42 vorstehende Vorsprünge 45 auf.

Das Verschleißblech 34 des Mitnehmers 3 besitzt sowohl am mittelabschnittsseitigen Ende 43 als auch am endabschnittsseitigen Ende 42 vorstehende Vorsprünge 44, 45.

Mit den Vorsprüngen 44, 45 umgreifen die Verschleißbleche 33, 34, 36 Widerlagerflächen 46, 47 an den Mitnehmern 2, 3, 5 bzw. am Mittelabschnitt 10 oder am Endabschnitt 28.

Bei dem Verschleißblech 35 - 39 des Mitnehmers 4 - 8 wie in den zugehörigen Figuren zu erkennen, ist ein Endabschnitt 48 des Verschleißblechs 35 - 39 nach oben umgeformt und umgreift die Kratzerspitze 29 bereichsweise.

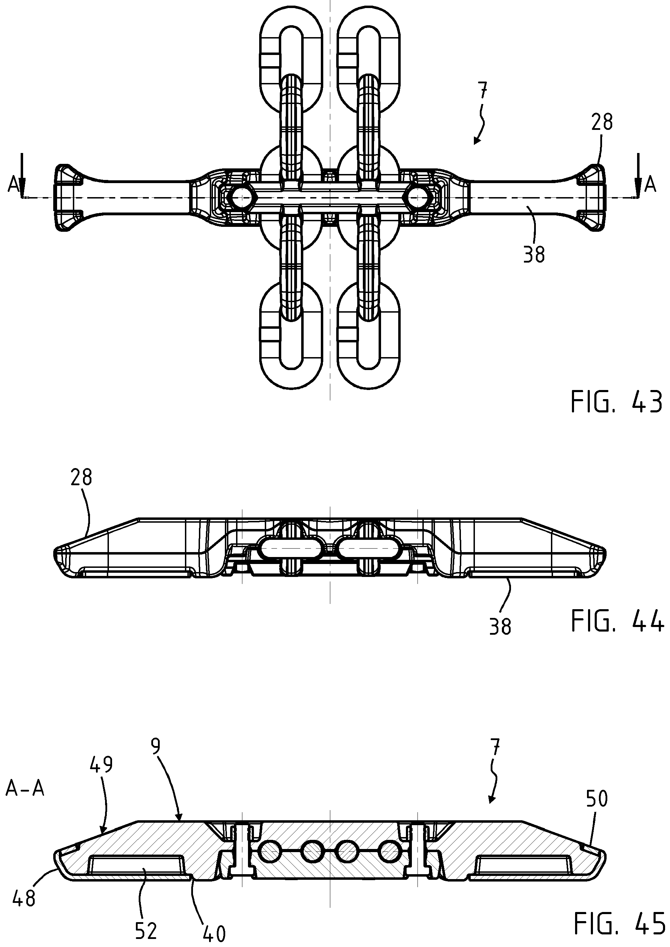

Bei dem Mitnehmer 7, wie in den Figuren 43 - 49 dargestellt, ist an der Oberseite 49 des Endabschnitts 28 eines Kratzerflügels 26 ein Verschleißkörper 50 vorgesehen. Der Verschleißkörper 50 ist als separates Bauteil oberseitig mit dem Mitnehmer 7 an der Oberseite 49 des Endabschnitts 28 in einer Aufnahme 53 stoffschlüssig gefügt.

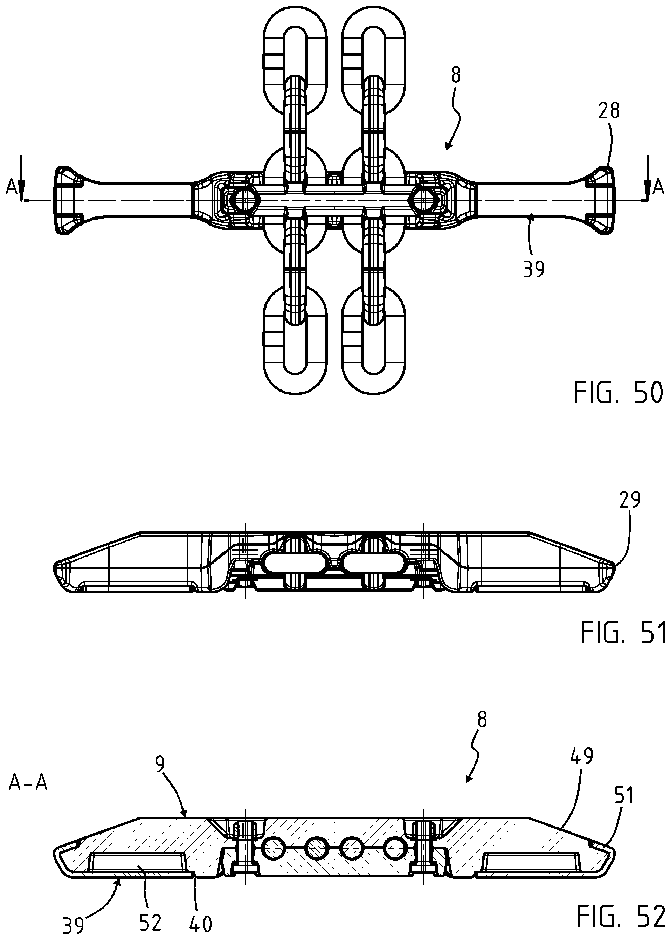

Bei dem Mitnehmer 8, wie in den Figuren 50 - 56 dargestellt, sind das Verschleißblech 39 und ein oberseitiger Verschleißkörper 51 materialeinheitlich einstückig ausgebildet. Das Verschleißblech 39 ist mit seinem endseitigen Verschleißkörper 51 um die Kratzerspitze 29 herum geführt bis auf die Oberseite 49 des Endabschnitts 28 am Kratzerflügel 26. Auch der oberseitige Verschleißkörper 51 liegt in einer vertieften Aufnahme 53 in der Oberseite 49 des Endabschnitts 28 an.

Auch der Verschleißkörper 50 ist besonders bevorzugt aus einem verschleiß- und abriebfestem Stahl ausgeführt mit einer Brinellhärte von größer oder gleich (≥) 400 HB, insbesondere mit einer Brinellhärte von 400 HB bis 600 HB.

Jeder Mitnehmer 1 - 8 weist unterseitig in den Kratzerflügeln 26 jeweils einen sich in Längsrichtung des Kratzerflügels 26 erstreckenden Hohlraum 52 auf. Der Hohlraum 52 ist von den Verschleißblechen 32 - 39 abgedeckt.

Die Verschleißbleche 32 - 39 liegen mit ihren mittelabschnittsseitigen Ende 43 an der Stufe 40 an. Am endabschnittsseitigen Ende 42 gelangen die Verschleißbleche 32 - 39 mit Wiederlagerflächen 47 unterseitig des Endabschnitts 28 zum Eingriff.

Die Verschleißbleche 32 - 39 sind unterseitig mit den Mitnehmern 1 - 8 verschweißt. Dies kann umlaufend oder punktuell erfolgen. Die Verschleißbleche 32 - 39 schließen bündig mit der Unterseite 31 der Mitnehmer 1 - 8 ab.

### Bezugszeichen:

- 1 -: Mitnehmer
- 2 -: Mitnehmer
- 3 -: Mitnehmer
- 4 -: Mitnehmer
- 5 -: Mitnehmer
- 6 -: Mitnehmer
- 7 -: Mitnehmer
- 8 -: Mitnehmer
- 9 -: Grundkörper
- 10 -: Mittelabschnitt
- 11 -: Kettengliedaufnahme
- 12 -: Kettenglied
- 13 -: Kettenglied
- 14 -: Fördererkette
- 15 -: Schenkel
- 16 -: Ausnehmungen
- 17 -: Verschlussteil
- 18 -: Ausnehmungen
- 19 -: Schraubbolzen
- 20 -: Bohrungen
- 21 -: Bohrungen
- 22 -: Aufnahme
- 23 -: Gewindemutter
- 24 -: Vertiefung
- 25 -: Bolzenkopf
- 26 -: Kratzerflügel
- 27 -: Stegabschnitt
- 28 -: Endabschnitt
- 29 -: Kratzerspitze
- 30 -: Übergangsabschnitt
- 31 -: Unterseite von 27
- 32 -: Verschleißblech
- 33 -: Verschleißblech
- 34 -: Verschleißblech
- 35 -: Verschleißblech
- 36 -: Verschleißblech
- 37 -: Verschleißblech
- 38 -: Verschleißblech
- 39 -: Verschleißblech
- 40 -: Stufe
- 41 -: Basisabschnitt
- 42 -: verbreitertes, endabschnittsseitiges Ende
- 43 -: mittelabschnittsseitiges Ende
- 44 -: Vorsprünge
- 45 -: Vorsprünge
- 46 -: Widerlagerfläche
- 47 -: Widerlagerfläche
- 48 -: Endabschnitt
- 49 -: Oberseite von 28
- 50 -: Verschleißkörper
- 51 -: Verschleißkörper
- 52 -: Hohlraum
- 53 -: Aufnahme

- B1 -: Breite
- B2 -: Breite
- L1 -: Länge
- L2 -: Länge
- H1 -: Höhe
- H2 -: Höhe

## Patentansprüche

1. Mitnehmer (1 - 8) für Kettenkratzerförderer, welcher einen Mittelabschnitt (10) aufweist mit einer Kettengliedaufnahme (11) zum Anschließen des Mitnehmers (1 - 8) an Kettenglieder (12, 13) einer Fördererkette (14), wobei sich beidseitig an den Mittelabschnitt (10) Kratzerflügel (26) anschließen und jeder Kratzerflügel (26) einen Stegabschnitt (27) und einen gegenüber dem Stegabschnitt (27) verbreiterten Endabschnitt (28) besitzt, wobei an der Unterseite (31) des Stegabschnitts (27) ein Verschleißblech (32 - 39) vorgesehen ist, welches ausgehend von einer Stufe (40) an der Unterseite (31) des Mittelabschnitts (10) den Stegabschnitt (27) in Richtung zum Endabschnitt (28) abdeckt, **dadurch gekennzeichnet, dass** unterseitig in jedem Kratzerflügel (26) ein sich in dessen Längsrichtung erstreckender Hohlraum (52) vorgesehen ist, welcher unterseitig von dem Verschleißblech (32 - 39) abgedeckt ist.

2. Mitnehmer nach Anspruch 1, **dadurch gekennzeichnet, dass** das Verschleißblech (32 - 39) einen Basisabschnitt (41) und ein gegenüber dem Basisabschnitt (41) verbreitertes Ende (42) aufweist.

3. Mitnehmer nach Anspruch 1 oder 2, **dadurch gekennzeichnet, dass** das Verschleißblech (32 - 39) sich bis zum Endabschnitt (48) des Kratzerflügels (26) erstreckt und den Endabschnitt (28) zumindest bereichsweise abdeckt.

4. Mitnehmer nach wenigstens einem der Ansprüche 1 bis 3, **dadurch gekennzeichnet, dass** jeder Kratzerflügel (26) eine Kratzerspitze (29) aufweist und die Kratzerspitze (29) zumindest bereichsweise vom Verschleißblech (32 - 39) abgedeckt ist.

5. Mitnehmer nach wenigstens einem der Ansprüche 1 bis 4, **dadurch gekennzeichnet, dass** an der Oberseite (49) des Endabschnitts (28) eines Kratzerflügels (26) ein Verschleißkörper (50, 51) vorgesehen ist.

6. Mitnehmer nach Anspruch 5, **dadurch gekennzeichnet, dass** das Verschleißblech (39) und der Verschleißkörper (51) materialeinheitlich einstückig ausgeführt sind.

7. Mitnehmer nach wenigstens einem der Ansprüche 1 bis 6, **dadurch gekennzeichnet, dass** das Verschleißblech (32 - 39) und/oder der Verschleißkörper (50, 51) aus einem verschleiß- und abriebfesten Stahl besteht mit einer Brinellhärte von größer oder gleich (≥) 400 HB, insbesondere mit einer Brinellhärte von 400 HB bis 600 HB.

8. Mitnehmer nach wenigstens einem der Ansprüche 1 bis 7, **dadurch gekennzeichnet, dass** das Verschleißblech (32 - 39) am mittelabschnittsseitigen Ende (43) und/oder am endabschnittsseitigen Ende (42) vorstehende Vorsprünge (44, 45) aufweist.

9. Mitnehmer nach wenigstens einem der Ansprüche 1 bis 8, **dadurch gekennzeichnet, dass** das Verschleißblech (32 - 39) eine Länge (L1) und ein Kratzerflügel (26) eine Länge (L2) besitzt, wobei das Verhältnis (L1:L2) der Länge (L1) des Verschleißblechs (32 - 39) zur Länge (L2) des Kratzerflügels (26) zwischen 20 % - 100 % oder zwischen 50 % - 100 % oder zwischen 65 % - 90 % bemessen ist.

10. Mitnehmer nach wenigstens einem der Ansprüche 1 bis 9, **dadurch gekennzeichnet, dass** das Verschleißblech (32 - 39) eine Höhe (H1) und ein Kratzerflügel (26) an seiner höchsten Stelle eine Höhe (H2) besitzt, wobei das Verhältnis (H1:H2) der Höhe (H1) des Verschleißblechs (32 - 39) zur Höhe (H2) des Kratzerflügels (26) zwischen 6 % - 35 % oder zwischen 8 % - 35 % oder zwischen 10 % - 20 % bemessen ist.

11. Mitnehmer nach wenigstens einem der Ansprüche 1 bis 10, **dadurch gekennzeichnet, dass** das Verschleißblech (32 - 39) eine Breite (B1) und ein Kratzerflügel (26) eine Breite (B2) besitzt, wobei das Verhältnis (B1:B2) der Breite (B1) des Verschleißblechs (32 - 39) zur Breite (B2) des Kratzerflügels (26) zwischen 50 % - 200 % oder zwischen 60 % - 120 % bemessen ist.

## Claims

1. Driver (1 - 8) for scraper chain conveyors which has a middle portion (10) having a chain member receptacle (11) for attaching the driver (1 - 8) to chain members (12, 13) of a conveying chain (14), wherein scraper wings (26) attach on both sides to the middle portion (10) and each scraper wing (26) has a web portion (27) and an end portion (28) which is broadened with respect to the web portion (27), wherein on the bottom side (31) of the web portion (27) is provided a wear plate (32 - 39) which, starting from a step (40) on the bottom side (31) of the middle portion (10) covers the web portion (27) in the direction towards the end portion (28), **characterised in that** in the bottom side of each scraper wing (26) is provided a hollow space (52) extending its longitudinal direction which is covered on the bottom side by the wear plate (32 - 39).

2. Driver according to claim 1, **characterised in that** the wear plate (32 - 39) has a base portion (41) and an end (42) which is broadened with respect to the base portion (41).

3. Driver according to claim 1 or 2, **characterised in that** the wear plate (32 - 39) extends as far as the end portion (48) of the scraper wing (26) and covers the end portion (28) at least partially.

4. Driver according to at least one of claims 1 to 3, **characterised in that** each scraper wing (26) has a scraper tip (29) and the scraper tip (29) is covered at least partially by the wear plate (32 - 39).

5. Driver according to at least one of claims 1 to 4, **characterised in that** a wear body (50, 51) is provided on the top side (49) of the end portion (28) of a scraper wing (26).

6. Driver according to claim 5, **characterised in that** the wear plate (39) and the wear body (51) are designed of the same material in one piece.

7. Driver according to at least one of claims 1 to 6 **characterised in that** the wear plate (32 - 39) and/or the wear body (50, 51) consists of a wear-resistant and abrasion-resistant steel with a Brinell hardness of greater than or equal to (>) 400 HB, in particular with a Brinell hardness of 400 HB to 600 HB.

8. Driver according to at least one of claims 1 to 7, **characterised in that** the wear plate (32 - 39) has protruding projections (44, 45) on the end (43) of the middle portion and/or on the end (42) of the end portion.

9. Driver according to at least one of claims 1 to 8, **characterised in that** the wear plate (32 - 39) has a length (L1) and a scraper wing (26) has a length (L2), wherein the ratio (L1:L2) of the length (L1) of the wear plate (32 - 39) to the length (L2) of the scraper wing (26) is between 20 % to 100 % or between 50 % - 100% or between 65 % to 90% in size.

10. Driver according to at least one of claims 1 to 9, **characterised in that** the wear plate (32 - 39) has a height (H1) and a scraper wing (26) has at its highest point a height (H2), wherein the ratio (H1:H2) of the height (H1) of the wear plate (32 - 39) to the height (H2) of the scraper wing (26) is between 6 % - 35 % or between 8 % - 35 % or between 10 % - 20 % in size.

11. Driver according to at least one of claims 1 to 10, **characterised in that** the wear plate (32 - 39) has a breadth (B1) and a scraper wing (26) has a breadth (B2), wherein the ratio (B1:B2) of the breadth (B1) of the wear plate (32 - 39) to the breadth (B2) of the scraper wing (26) is between 50% - 200% or between 60% - 120% in size.

## Revendications

1. Entraîneur (1 - 8) pour convoyeur à raclettes à chaîne, lequel présente une section centrale (10) avec un logement de maillon de chaîne (11) pour le raccordement de l'entraîneur (1 - 8) à des maillons de chaîne (12, 13) d'une chaîne de convoyeur (14), dans lequel des ailes de raclette (26) se raccordent des deux côtés à la section centrale (10) et chaque aile de raclette (26) possède une section de barre (27) et une section d'extrémité (28) élargie par rapport à la section de barre (27), dans lequel une tôle d'usure (32 - 39) est prévue sur la face inférieure (31) de la section de barre (27), laquelle recouvre la section de barre (27) en direction de la section d'extrémité (28) en partant d'un gradin (40) sur la face inférieure (31) de la section centrale (10), **caractérisé en ce qu'**un espace creux (52) s'étendant dans la direction longitudinale de chaque aile de raclette (26) est prévu sur la face inférieure de celle-ci, lequel est recouvert sur la face inférieure par la tôle d'usure (32 - 39).

2. Entraîneur selon la revendication 1, **caractérisé en ce que** la tôle d'usure (32 - 39) présente une section de base (41) et une extrémité (42) élargie par rapport à la section de base (41).

3. Entraîneur selon la revendication 1 ou 2, **caractérisé en ce que** la tôle d'usure (32 - 39) s'étend jusqu'à la section d'extrémité (48) de l'aile de raclette (26) et recouvre la section d'extrémité (28) au moins par zones.

4. Entraîneur selon au moins l'une quelconque des revendications 1 à 3, **caractérisé en ce que** chaque aile de raclette (26) présente une pointe de raclette (29) et **en ce que** la pointe de raclette (29) est recouverte au moins par zones par la tôle d'usure (32-39).

5. Entraîneur selon au moins l'une quelconque des revendications 1 à 4, **caractérisé en ce qu'**un corps d'usure (50, 51) est prévu sur la face supérieure (49) de la section d'extrémité (28) d'une aile de raclette (26).

6. Entraîneur selon la revendication 5, **caractérisé en ce que** la tôle d'usure (39) et le corps d'usure (51) sont réalisés d'un seul tenant en une seule pièce.

7. Entraîneur selon au moins l'une quelconque des revendications 1 à 6, **caractérisé en ce que** la tôle d'usure (32-39) et/ou le corps d'usure (50, 51) consiste en un acier résistant à l'usure et à l'abrasion avec une dureté Brinell supérieure ou égale à (>) 400 HB, en particulier avec une dureté Brinell de 400 HB à 600 HB.

8. Entraîneur selon au moins l'une quelconque des revendications 1 à 7, **caractérisé en ce que** la tôle d'usure (32-39) présente des saillies (44, 45) à l'extrémité (43) située du côté de la section centrale et/ou à l'extrémité (42) située du côté de la section d'extrémité.

9. Entraîneur selon au moins l'une quelconque des revendications 1 à 8, **caractérisé en ce que** la tôle d'usure (32-39) possède une longueur (L1) et une aile de raclette (26) possède une longueur (L2), dans lequel le rapport (L1:L2) de la longueur (L1) de la tôle d'usure (32-39) à la longueur (L2) de l'aile de raclette (26) est dimensionné entre 20 % - 100 % ou entre 50 % - 100 % ou entre 65 % - 90 %.

10. Entraîneur selon au moins l'une quelconque des revendications 1 à 9, **caractérisé en ce que** la tôle d'usure (32-39) possède une hauteur (H1) et une aile de raclette (26) possède une hauteur (H2) à son point le plus haut, dans lequel le rapport (H1:H2) de la hauteur (H1) de la tôle d'usure (32-39) à la hauteur (H2) de l'aile de raclette (26) est dimensionné entre 6 % et 35 % ou entre 8 % et 35 % ou entre 10 % et 20 %.

11. Entraîneur selon au moins l'une quelconque des revendications 1 à 10, **caractérisé en ce que** la tôle d'usure (32-39) possède une largeur (B1) et une aile de raclette (26) possède une largeur (B2), dans lequel le rapport (B1:B2) de la largeur (B1) de la tôle d'usure (32-39) à la largeur (B2) de l'aile de raclette (26) est dimensionné entre 50 % - 200 % ou entre 60 % -120 %.
